# EUROPEAN PATENT APPLICATION

(11) **EP 1 777 648 A1**
(43) Date of publication of application: **25.04.2007**
(21) Application number: 05023129.9
(22) Date of filing: 24.10.2005
(51) Int. Cl.: G06Q 10/00

(54) **Production planning with sequence independent setup activities**

(71) Applicant: SAP AG, 69190 Walldorf (DE)
(72) Inventor: Biegler, Hans-Jürgen, 68723 Schwetzingen (DE); Embacher, Christian, 69231 Rauenberg (DE); Schulz, Thomas, 67346 Speyer (DE); Jacob, Nikolaus, 77971 Kippenheim 2 (DE); Glania, Christoph, Dr., 69242 Mühlhausen-Rettigheim (DE); Kulick, Thorsten, 64625 Bensheim-Schönberg (DE); Wekenborg, Carmen, 69207 Sandhausen (DE)
(74) Representative: Walter, Philipe

(57) **Abstract**

Planning production processes with planning a sequence of processes running on a resource taking into account setup times for the resource for a process depending at least on predecessor process information, and storing the sequence of processes. To fix process times time intervals are defined for the resource within which setup times for processes are held constant independently of the predecessor process information.

## Description

### TECHICAL FIELD

The present application relates in general to production planning processes.

### BACKGROUND

In production processes, resource utilization is planned within a planning unit. Processes are planned to be run on resources. During execution, the processes are executed on the resources as planned. Running a process may comprise the steps: setup of the resource, production on the resource, and possibly tear down of the resource.

A process can be understood as an activity or operation on a resource. A resource can be understood as a machine, a utility, a material, a production plant, a transportation unit, or any other means suitable for working, producing, transporting, or packing a product, material, or assembly.

If a process is executed on a machine, the duration of a production step is determined by the machine itself, i.e. the duration of the production section on the machine is related to the rate of the machine.

However the setup time for setting up a resource often may not only be determined by the resource itself, but also by predecessor processes running on the resource and the materials used on the resource for the present process.

The scheduling of processes takes into account the information about predecessor processes and materials when executing the process planning. A certain sequence of processes is assumed and depending on this sequence, setup times for resources are estimated. These setup times depend at least on the process itself and the predecessor process.

During execution, an execution unit can read the process plan from a database and utilize the resources according to this plan. Process progress is reported back to the scheduling unit from the execution unit and stored in a database. This feedback, however, may influence the planning, for instance, if a progress of a process is not in conformance with a planned progress. During production, the storage of feedback of a process progress may influence the planning of the following processes. It may happen that due to the feedback the processes are automatically rescheduled to be in conformance with the actual situation at the execution.

In the very short term horizon, e.g. near the today line, the sequence of processes should, however, not change. Nevertheless, the real data from the execution feedback may change the planning situation in case the sequence of processes is scheduled automatically. So it may happen that there is a process backlog because of late confirmations of processes. Reasons for that may be confirmations of processes that are reported to the scheduling late after actual execution of the processes or the sequence in which the processes are confirmed differs from the planned sequence.

The result of the interplay of process planning and process execution can be seen in the following example. After each process confirmation, the sequence dependent setup times of concerned, not confirmed processes have to be adjusted. This happens automatically, because the confirmed date differs in this case from the planned date.

The result of automatically rescheduling the sequence of processes is that the process planner may become confused. After each process confirmation, the setup times may change within the planning board, resulting in changed sequences of process.

Therefore, there is a need for process planning taking into account short term planning. The process planning in short term view needs to be predictable and reliable. Short term changes to the actual sequence of processes should not influence the previously planned sequence of processes.

### SUMMARY

In order to overcome these problems, the application provides, according to one aspect, a method for planning production processes with planning a sequence of processes running on a resource taking into account setup times for the resource for a process depending at least on predecessor process information, storing the sequence of processes, and defining time intervals for the resource within which setup times for processes are held constant independently of the predecessor process information.

Another aspect of the application is a computer program product tangibly embodied in an information carrier, and a computer program, the computer program product including instructions that, when executed, result in at least the following planning a sequence of processes running on a resource taking into account setup times for the resource for a process depending at least on predecessor process information, storing the sequence of processes, and defining time intervals for the resource within which setup times for processes are held constant independently of the predecessor process information.

Yet, a further aspect is a system for planning production processes comprising a scheduling unit arranged for planning a sequence of processes running on a resource taking into account setup times for the resource for a process depending at least on predecessor process information, a storage unit arranged for storing the sequence of processes, a fixing unit arranged for defining time intervals for the resource within which setup times for processes are held constant independently of the predecessor process information, and an execution unit arranged for retrieving the sequence order from the storage unit, executing the processes on the resource and reporting process progress to the storing unit.

### BRIEF DESCRIPTION OF THE DRAWINGS

In the figures:
- FIG. 1: illustrates a block diagram of a system according to embodiments;

- FIG. 2: illustrates a flowchart of a method according to embodiments;
- FIG. 3: illustrates a screenshot of a program for adjusting time intervals.

### DETAILED DESCRIPTION

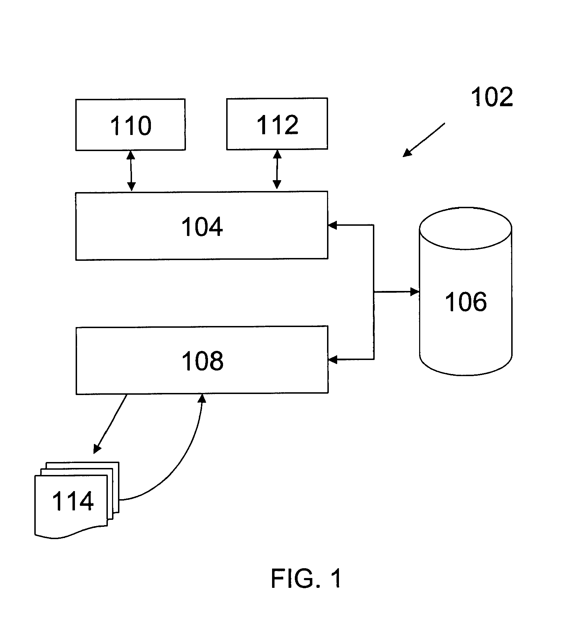

FIG. 1 illustrates a system 102 for executing a method according to embodiments. The system 102 comprises a scheduling unit 104, a storage unit 106 and an execution unit 108. The scheduling unit 104 is front-ended by an interface 110 for receiving production orders and a display 112 for displaying user information and for providing a user interface.

A computer program may be executed distributed on the scheduling unit 104 and the execution unit 108. When executed, the computer program may result in the method as described below.

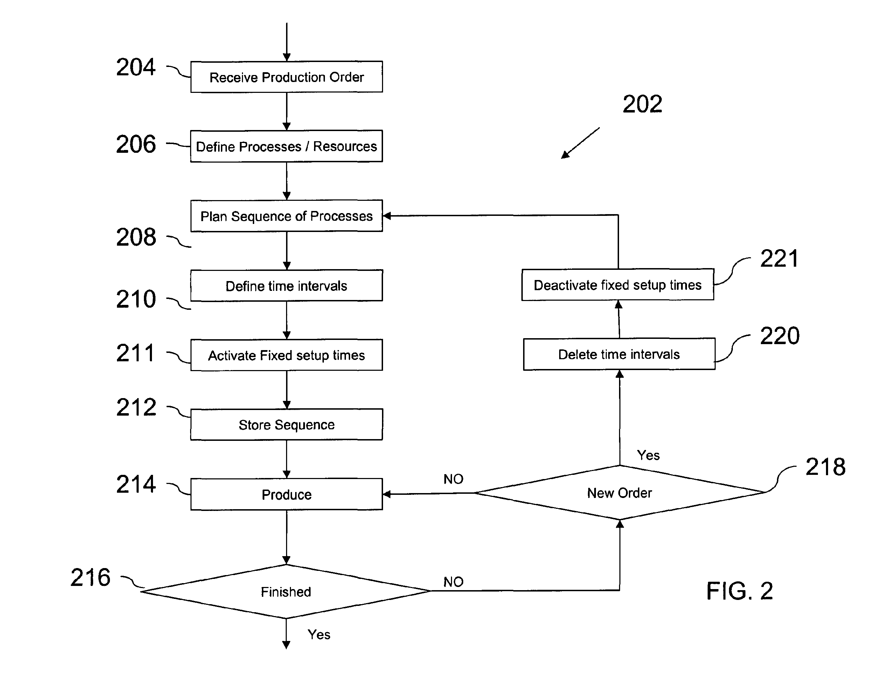

According to embodiments, a production planning may be executed according to a method 202 as illustrated in FIG. 2.

Scheduling unit 104 may receive (204) a production order from an enterprise resource planning (ERP) system, such as, for example, SAP R/3, my.SAP, SAP Netweaver, or any other production planning system via interface 110.

The received (204) production order is used within scheduling unit 104 to determine (206) resources necessary to finalize the production order. Further, the processes which need to be run on the resources need to be identified.

After having identified the resources and processes, a sequence of processes is planned (208) to finalize the production order. The planning of the sequence of processes is done such that setup times depending on predecessor processes are minimal and that the overall time for finalizing the production order is minimized. The setup time for a resource depends mainly on predecessor process information, e.g. the current state and type of the predecessor process on the resource. For example, in case the resource is a printer, the setup time for utilizing the printer with a dark colour after a bright colour has been used is less then vice versa.

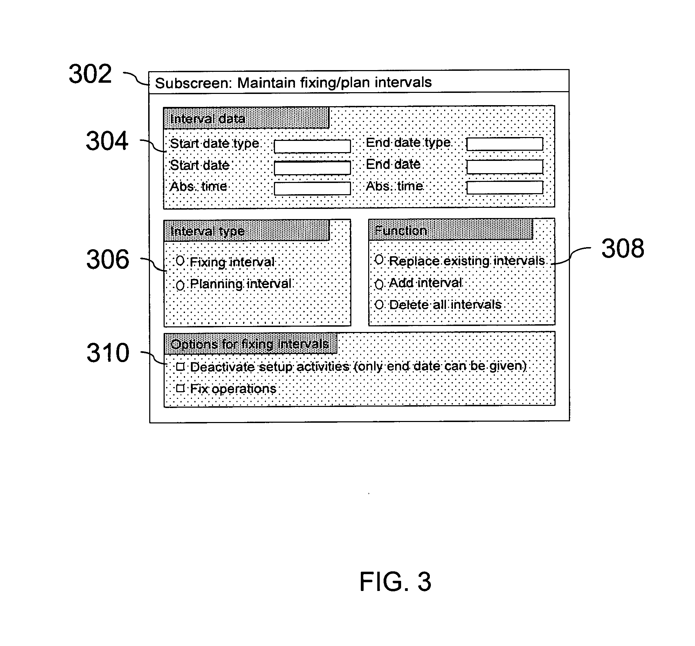

After having calculated a schedule of processes taking into account the setup times between different processes and minimizing the overall time for finalizing the production order, time intervals are defined (210), within which the setup times for the resources are held constant independently of the predecessor process. Within this time interval, the setup times are fixed (211). The steps 210, 211 may be combined into one single step. The definition of time intervals for fixed setup times is explained in more detail in combination with FIG. 3.

Once a time interval has been found, within which the setup times shall be fixed, a parameter for the resource can be changed, informing the planning unit about the activation of fixed setup times (211) for the particular resource. In order to prevent that unauthorized users change the parameter, it may be checked that the user has the authorization to change parameters for the resources.

The deactivation of a sequence dependent setup time and activation of fixed setup times (211) turns the process into a process with fixed duration, which is independent of a predecessor process.

In order to enable users to define which time intervals are suitable for fixing the setup times, planning unit 104 provides a user interface 112. An example of a user interface is illustrated in FIG. 3.

FIG. 3 illustrates a screenshot 302 of a user interface. Illustrated are interval data section 304, interval type section 306, function section 308, and options section 310.

Within the interval data section 304 the relative start date and end date with an absolute time can be given. The data type may contain the values Hours, Days, Weeks and/or Months.

In the interval type section 306, it can be chosen whether an interval where the setup times shall be fixed or intervals where the sequence of processes shall be planned dynamically is maintained. It is possible to replace existing intervals by new intervals, add new intervals and to delete existing intervals. This selection may be done in function section 308.

Additional it will be possible to deactivate all sequence dependent setup times within a fixing interval or to activate sequence dependent setup times in options section 310. It may be possible to restrict this option to the condition that the start of the interval must be empty. This can be checked by the system. If an existing time interval with fixed setup times that was previously created is extended, then the deactivated sequence dependent setup times are only activated, when they are outside of the new fixing intervals. The sequence dependent setup times that lie within the new fixing interval, can be deactivated.

A heuristic can be used to apply the selected time intervals, which are suitable for fixing the setup times onto the resources for further process planning. Such time intervals may be close to the today line, e.g. within hours, days, weeks and months of the current date. The duration and position of these time intervals may depend on the rate of a production process. E.g. in processes which take a long time to finish the order, the time interval may be chosen longer then for processes which finalized tens, hundreds, thousands or even more orders within short time, e.g. minutes, hours, days. The heuristic may be understood as a rule, which converts the user selections of time intervals and activation/deactivation of fixed setup times onto the resources, so that these operate and react during further production planning accordingly.

The sequence of processes as planned (208) together with fixed time intervals, within which the setup times for the resources can be held constant independently of the predecessor process, is stored (212) within storage unit 106.

Execution unit 108 reads from storage unit 106 the sequence of processes. In order to enable production to carry out the processes as planned, production order sheets 114 may be printed out. With these order sheets 114 the staff can operate resources as planned (214). The progress of a resource can be reported back to the execution unit 108 with a feedback feature.

The feedback is stored in storage unit 106. Using the feedback information, it is checked (216) if the production order is finished. In this case the scheduling for this production order is stopped.

Else, it is checked (218), whether a new production order or an order change has been received via interface 110 in planning unit 104. If not, production (214) is further carried out.

In case an order change was received on interface 110, e.g. due to partial confirmation, change of order quantity, change of source of supply, and other circumstances, the order change may be accounted for within production planning.

For example, in case an order change relates to a change of quantity, some processes which were assigned fixed setup times may be moved outside the selected time interval. In this case the fixed setup times may not correspond to the predecessor process anymore.

It may also be possible that processes that are confirmed, lie outside the time interval. In this case it may be possible that the confirmed process is deactivated, because these processes cannot be rescheduled due to their state.

In case of an order change, it may be possible to reschedule processes.

In such a case it may be possible to delete (220) the defined time intervals. Together with deletion (220) of the time intervals, the fixed setup times for resources can be deactivated (221). The steps can 220, 221 can be combined into one single step.

After having deleted the selected time intervals (220) and deactivated the fixed setup times (221), the sequence of processes is again planned (208).

It will be understood that various modifications may be made without departing from the spirit and scope of the claims. For example, advantageous results still could be achieved if steps of the disclosed techniques were performed in a different order and/or if components in the disclosed systems were combined in a different manner and/or replaced or supplemented by other components. Accordingly, other implementations are within the scope of the following claims.

## Claims

1. A method for planning production processes with planning a sequence of processes running on a resource taking into account setup times for the resource for a process depending at least on predecessor process information,
storing the sequence of processes, and
defining time intervals for the resource within which setup times for processes are held constant independently of the predecessor process information.

2. The method of claim 1, further comprising retrieving the stored sequence of processes for execution on the resource.

3. The method of any one of the previous claims, further comprising storing the predecessor process information.

4. The method of any one of the previous claims, wherein the sequence of processes and the predecessor process information are stored within one same database.

5. The method of any one of the previous claims, wherein defining time intervals comprises utilizing a heuristic to find time intervals on the resource within which the setup times can be held constant.

6. The method of any one of the previous claims wherein the time intervals are within the range of
A) hours,
B) days,
C) weeks,
D) months.

7. The method of any one of the previous claims, wherein defining time intervals comprises determining time intervals near the today line.

8. The method of any one of the previous claims, wherein the predecessor process information comprises at least one of
A) the type of a predecessor process, and
B) the progress of a predecessor process.

9. The method of any one of the previous claims, wherein planning the sequence order comprises planning a sequence of processes on a resource such that setup times depending on predecessor process information are minimized.

10. A computer program product tangibly embodied in an information carrier, the computer program product including instructions that, when executed, result in at least the following:
planning a sequence of processes running on a resource taking into account setup times for the resource for a process depending at least on predecessor process information,
storing the sequence of processes, and
defining time intervals for the resource within which setup times for processes are held constant independently of the predecessor process information.

11. A computer program including instructions that, when executed, result in at least the following:
planning a sequence of processes running on a resource taking into account setup times for the resource for a process depending at least on predecessor process information,
storing the sequence of processes, and
defining time intervals for the resource within which setup times for processes are held constant independently of the predecessor process information.

12. A system for planning production processes comprising a scheduling unit arranged for planning a sequence of processes running on a resource taking into account setup times for the resource for a process depending at least on predecessor process information,
a storage unit arranged for storing the sequence of processes,
a fixing unit arranged for defining time intervals for the resource within which setup times for processes are held constant independently of the predecessor process information, and
an execution unit arranged for retrieving the sequence order from the storage unit, executing the processes on the resource and reporting process progress to the storing unit.
